# EUROPEAN PATENT APPLICATION

(11) **EP 4 728 877 A1**
(43) Date of publication of application: **22.04.2026**
(21) Application number: 24823217.5
(22) Date of filing: 28.05.2024
(51) Int. Cl.: A23L 27/00, A23F 5/24, A23L 2/00, A23L 2/38, A23L 2/52, A23L 29/00, C12G 3/04

(54) **FLAVOR DETERIORATION INHIBITOR**

(30) Priority: 14.06.2023 JP 2023097367
(71) Applicant: Fuji Oil Company, Limited, Izumisano-shi Osaka 598-8540 (JP)
(72) Inventor: MIZUSHIMA, Shigeki, Tsukubamirai-shi, Ibaraki 300-2436 (JP)
(74) Representative: Becker, Eberhard
(86) International application number: PCT/JP2024/019464
(87) International publication number: WO 2024/257597

(57) **Abstract**

Provided is a flavor deterioration inhibitor that, when used in a beverage, suppresses flavor deterioration caused by the storage environment, especially flavor deterioration caused by light irradiation, without adversely affecting the original flavor of the beverage. Also provided is a beverage including said flavor deterioration inhibitor. A flavor deterioration inhibitor that is for food and drink and includes a protein material having the following properties A and B is used. Alternatively, by configuring a beverage to include 10-1,500 ppm of said protein material, flavor deterioration caused by the storage environment can be suppressed. (A) An aqueous solution including a crude protein amount of 20 mass% has a viscosity of 10,000 mPa·s or less when measured at 25°C after having been heated at 80°C for 30 minutes. (B) The 0.22 M TCA solubilization is 30%-95%.

## Description

### Technical Field

The present invention relates to a flavor deterioration inhibitor for food and/or drink.

### Background Art

Beverages are products with high palatability, and for example, in fruit juice and fruit juice-containing beverages, the palatability created from the refreshing aroma and taste derives a key aspect of their value. In addition, since vegetable juice and vegetable juice-containing beverages have a flavor such as grassy smell and off-putting taste, it is generally desired to reduce the unwanted flavor as much as possible rather than to increase the nutritional value, although the palatability is not high. The characteristic flavor of the extract of grains or tea leaves, which is representative of coffee, is directly linked to the palatability.

These are beverages containing various naturally derived aroma components, taste components, and the like, but meanwhile, beverages contain a large amount of components that are likely to deteriorate due to temperature, light, and oxidation. Therefore, great care is taken in beverages against deterioration of aroma components, taste components, and the like, due to light exposure during production, or in the distribution and storage stages. However, the problem tends to occur in containers other than metal containers, for example, paper containers, and is more serious in some transparent containers such as plastic and glass bottles. For example, a beverage displayed in a store or the like may generate an undesirable odor over time (in the present specification, such an odor is also referred to as a "photodegradation odor") by being irradiated with light. Such a beverage has a problem that the flavor is poor, which significantly reduces the commercial value.

A general method for preventing photodegradation and the like of the beverages includes a method of adding an antioxidant, a method of distributing and storing at a low temperature, a method of using a container shielded from light and outside air, a method of adding another flavoring agent, and the like. However, depending on a target beverage, these methods may be difficult to apply or may fail to provide a sufficient effect of preventing the deterioration of aroma and taste, and thus have not yielded satisfactory results.

As the antioxidant, dibutylhydroxytoluene, butylhydroxyanisole, tocopherol, ascorbic acid, erythorbic acid, and tocopherol are used, but in some cases, there is a problem that the antioxidant itself is oxidized to be colored, or the original flavor of food is impaired. In addition, it is desired not to use synthetic antioxidants such as butylhydroxyanisole, dibutylhydroxytoluene, and nordihydroguaiaretic acid due to growing consumer awareness of safety.

Various known methods have been disclosed to suppress deterioration, such as photodegradation, caused by light, heat, oxidation, or the like during production, distribution, and sale of beverages such as fruit juice.

Patent Document 1 proposes a method of masking a photodegradation odor in a red grape-flavored beverage by blending a predetermined aroma component based on a medium-to-short chain fatty acid ester. Patent Document 2 proposes a method of masking an offensive odor derived from a fruit flavor in a transparent beverage containing a citrus fruit flavor such as lemon by blending a predetermined aroma component.

Patent Document 3 proposes a fruit juice-containing beverage with suppressed photodegradation, the fruit juice-containing beverage containing 0.00006 wt.% to 0.03 wt.% (0.6 to 300 ppm) of tocopherol, 0.0000005 wt.% to 0.0005 wt.% (0.005 to 5 ppm) of lutein, and 0.00002 wt.% to 0.01 wt.% (0.2 to 100 ppm) of enzyme-treated rutin, based on the total amount of the beverage.

Patent Document 4 proposes a method for suppressing a photodegradation odor in a soft fruit juice-containing beverage by blending a peptide.

Patent Document 5 proposes a method for preventing deterioration of coffee flavor, the method including blending, as an active ingredient, a fraction having a molecular weight cutoff of about 6000 or more, obtained by treating an aqueous solvent extract of roasted coffee with an ultrafiltration membrane. However, this method has been shown to be effective for coffee flavors.

### Citation List

### Patent Document

Patent Document 1: JP 2020-25529 A
Patent Document 2: JP 2016-127818 A
Patent Document 3: JP 2017-189119 A
Patent Document 4: JP 2021-61777 A
Patent Document 5: JP H02-104242 A

### Summary of Invention

### Technical Problem

In the methods of Patent Documents 1 and 2, it is necessary to blend an aroma component, and in the recent natural intention and additive-free intention, the aroma component tends to be repelled, and the modification of the flavor due to the aroma component is also a problem. The method of Patent Document 3 only suppresses oxidation of mainly hydrophobic components, and cannot completely suppress flavor deterioration due to photodegradation. In the method of Patent Document 4, it is necessary to blend a relatively large amount of peptide, and the flavor derived from the peptide may impair the original flavor of the beverage.

The method of Patent Document 5 does not show effectiveness in coffee. In addition, the document does not show effectiveness in suppressing photodegradation caused by light irradiation. Furthermore, the need to obtain a fraction of a specific molecular weight leads to high costs.

Since beverages have a natural flavor, there is a need for further development of a method for suppressing deterioration, which has an effective deterioration suppressing effect by adding a deterioration suppressing component, and at the same time, avoids the influence on the original flavor of the beverage itself as much as possible and has an effective deterioration suppressing effect.

The present invention has been proposed in view of such circumstances, and an object thereof is to provide a flavor deterioration inhibitor that, when used in a beverage, suppresses flavor deterioration caused by a storage environment, particularly flavor deterioration caused by light irradiation, without impairing the original flavor of the beverage, and a beverage containing the flavor deterioration inhibitor.

### Solution to Problem

As a result of intensive studies to solve the above problems, the present inventors have found that flavor deterioration caused by light irradiation in a beverage is suppressed by adding a protein material having specific properties to the beverage, and have completed the present invention.

That is, the present invention relates to the following:
(1) A flavor deterioration inhibitor for food and/or drink, including a protein material having properties A and B set forth below:
   (A) after an aqueous solution having a crude protein mass of 20 mass% is heated at 80°C for 30 minutes, a viscosity measured at 25°C is 10000 mPa·s or less; and
   (B) a TCA solubilization percentage of 0.22 M is from 30% to 95%.
(2) The flavor deterioration inhibitor according to (1), wherein the food and/or drink is a beverage.
(3) The flavor deterioration inhibitor according to (2), wherein the beverage is one or more selected from fruit juice, vegetable juice, and coffee.
(4) The flavor deterioration inhibitor according to (3), wherein the fruit juice includes one or more selected from citrus fruits, apples, and grapes.
(5) The flavor deterioration inhibitor according to (1), wherein flavor deterioration is due to photodegradation caused by light irradiation.
(6) The flavor deterioration inhibitor according to (2), wherein flavor deterioration is due to photodegradation caused by light irradiation.
(7) The flavor deterioration inhibitor according to (3), wherein flavor deterioration is due to photodegradation caused by light irradiation.
(8) The flavor deterioration inhibitor according to (4), wherein flavor deterioration is due to photodegradation caused by light irradiation.
(9) A beverage, containing from 10 to 1500 ppm of a protein material having properties A and B set forth below, the beverage including one or more selected from fruit juice, vegetable juice, and coffee:
   (A) after an aqueous solution having a crude protein mass of 20 mass% is heated at 80°C for 30 minutes, a viscosity measured at 25°C is 10000 mPa·s or less; and
   (B) a TCA solubilization percentage of 0.22 M is from 30% to 95%.
(10) The beverage according to (9), containing from 5 to 1000 ppm of a fatty acid ester of ascorbic acid.
(11) The beverage according to (10), containing from 1 ppm or more of a water-soluble polysaccharide derived from a *Fabaceae* plant.
(12) The beverage according to (9), including one or more selected from citrus fruits, apples, and grapes.
(13) The beverage according to (10), including one or more selected from citrus fruits, apples, and grapes.
(14) The beverage according to (11), including one or more selected from citrus fruits, apples, and grapes.
(15) A method for suppressing flavor deterioration of a beverage, the method including blending, with the beverage, a protein material having properties A and B set forth below:
   (A) after an aqueous solution having a crude protein mass of 20 mass% is heated at 80°C for 30 minutes, a viscosity measured at 25°C is 10000 mPa·s or less; and
   (B) a TCA solubilization percentage of 0.22 M is from 30% to 95%.
(16) The method for suppressing flavor deterioration according to (15), wherein the flavor deterioration is due to photodegradation caused by light irradiation. The present invention also relates to the following:
   (1) A flavor deterioration inhibitor for food and/or drink, including a protein material having properties A and B set forth below: (A) after an aqueous solution having a crude protein mass of 20 mass% is heated at 80°C for 30 minutes, a viscosity measured at 25°C is 10000 mPa·s or less; and (B) a TCA solubilization percentage of 0.22 M is from 30% to 95%.
   (2) The flavor deterioration inhibitor according to (1), wherein flavor deterioration is due to photodegradation caused by light irradiation.
   (3) The flavor deterioration inhibitor according to (1) or (2), wherein the food and/or drink is a beverage.
   (4) The flavor deterioration inhibitor according to (3), wherein the beverage includes one or more selected from fruit juice, vegetable juice, and coffee.
   (5) The flavor deterioration inhibitor according to (4), wherein the fruit juice includes one or more selected from citrus fruits, apples, and grapes.
   (6) A beverage, containing from 10 to 1500 ppm of a protein material having properties A and B set forth below, the beverage including one or more selected from fruit juice, vegetable juice, and coffee: (A) after an aqueous solution having a crude protein mass of 20 mass% is heated at 80°C for 30 minutes, a viscosity measured at 25°C is 10000 mPa·s or less; and (B) a TCA solubilization percentage of 0.22 M is from 30% to 95%.
   (7) The beverage according to (6), containing from 5 to 1000 ppm of a fatty acid ester of ascorbic acid.
   (8) The beverage according to (7), containing 1 ppm or more of a water-soluble polysaccharide derived from a *Fabaceae* plant.
   (9) The beverage according to any one of (6) to (8), including one or more selected from citrus fruits, apples, and grapes.
   (10) A method for suppressing flavor deterioration of a beverage, the method including blending, with the beverage, a protein material having properties A and B set forth below: (A) after an aqueous solution having a crude protein mass of 20 mass% is heated at 80°C for 30 minutes, a viscosity measured at 25°C is 10000 mPa·s or less; and (B) a TCA solubilization percentage of 0.22 M is from 30% to 95%.
   (11) The method for suppressing flavor deterioration according to (10), wherein the flavor deterioration is due to photodegradation caused by light irradiation.

### Advantageous Effects of Invention

According to the present invention, it is possible to provide a flavor deterioration inhibitor that suppresses flavor deterioration caused by a storage environment, particularly flavor deterioration caused by light irradiation, without impairing the original flavor of the beverage, and a beverage with suppressed flavor deterioration.

### Description of Embodiments

The present invention will be described in detail below.

### (Flavor Deterioration Inhibitor)

The flavor deterioration inhibitor of the present invention is added to a beverage to suppress flavor deterioration during storage of the beverage. The flavor deterioration refers to a phenomenon in which a favorable flavor is reduced and/or an unfavorable flavor is increased. For example, in the case of fruit juice, the fragrance of esters and lactones derived from fruits decreases, and the unpleasant odor of aldehydes, ketones, fatty acids and the like increases. The flavor deterioration inhibitor of the present invention can suppress both a decrease in fragrance and an increase in unpleasant odor.

Furthermore, the present invention is particularly suitable for flavor deterioration caused by light irradiation.

### (Protein material)

A protein material used in the present invention needs to have a low viscosity after heating. Specifically, the viscosity after heating can be measured as follows. An aqueous solution of the protein material is prepared so as to have a crude protein content of 20 mass%, the aqueous solution is heated at 80°C for 30 minutes, and then the viscosity of the aqueous solution is measured at 25°C. The viscosity after heating is 10000 mPa·s or less, preferably 5000 mPa·s or less, 1000 mPa·s or less, and 500 mPa·s or less, and more preferably 200 mPa·s or less, and 100 mPa·s or less.

The present protein material requires a molecular weight of a certain size. The molecular weight is defined by a TCA solubilization percentage. In the present invention, the TCA solubilization percentage is defined by the ratio of the amount of crude protein dissolved in 0.22 M TCA to the total crude protein content. The TCA solubilization percentage is from 30 to 95%, preferably from 35 to 90%, more preferably from 40 to 85% and from 50 to 80%. When the TCA solubilization percentage is too low, the viscosity after heating tends to increase, and the transmittance decreases. On the other hand, when the TCA solubilization percentage is too high, the amount of the protein contributing to the effect of suppressing the flavor deterioration decreases, and it is necessary to add a large amount of a protein material, so that a degree of freedom of formulation may decrease.

The present protein material preferably has an NSI (nitrogen solubility index) used as an index of protein solubility of 80 or more. More preferably, a protein material having an NSI of 85 or higher, 90 or higher, 95 or higher, or 97 or higher can be used. A high NSI of the protein material indicates high dispersibility in water and can contribute to the effect of suppressing flavor deterioration according to the present invention. When the NSI of the protein material is too low, precipitation tends to occur. The crude protein content in the protein material is also preferably 30 mass% or more, more preferably 40 mass% or more or 50 mass% or more, and most preferably 60 mass% or more or 70 mass% or more. A protein material having a higher crude protein content can exhibit its function in a smaller amount.

Such a protein material can be obtained by a denaturation and molecular weight adjustment treatment and the like described later. Examples of commercially available products include "MIRA-MAP 2.0" available from Fuji Oil Co., Ltd. Commercially available soybean protein materials such as "FUJIPRO R", "FUJIPRO 748", "FUJIPRO CL", and "HINUTE DC6" (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal protein include egg proteins containing ovalbumin, milk proteins such as casein, whey, lactalbumin, and lactalbumin, proteins derived from blood such as plasma, serum albumin, and decolorized hemoglobin, proteins derived from meat, and proteins derived from fish and shellfish. In addition, proteins derived from microorganisms such as yeasts, molds and bacteria can be used. Even in a protein having poor solubility in water, a protein material that can be used in the present invention can be prepared by the treatment described below.

### (Denaturation and molecular weight adjustment treatment)

The protein material used in the present invention is produced by applying combination of "degradation/denaturation treatment" for degrading and/or denaturing a protein and "molecular weight distribution adjustment treatment" for adjusting molecular weight distribution of the protein. Examples of the "degradation/denaturation treatment" include enzyme treatment, pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combinations thereof. The order and number of operations of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is provided by the "degradation/denaturation treatment, the "molecular weight distribution adjustment treatment" need not be performed. When these treatments are combined and carried out a plurality of times, all the treatments may be carried out continuously from the raw material stage or may be carried with intervals therebetween. For example, a commercially available product that has undergone a certain treatment may be used as a raw material and subjected to another treatment. As long as the above properties are satisfied, the specific protein material may be produced by mixing a protein material that has undergone the molecular weight distribution adjustment treatment with a protein material that has not undergone the molecular weight distribution adjustment treatment. In this case, the ratio of the two (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the present aspect is composed of a protein material that has undergone the "degradation/denaturation and molecular weight distribution adjustment treatments".

In the treatment for degrading or denaturing a protein, conditions such as, for example, the enzyme, the pH, the types and concentrations of an organic solvent and a mineral, the temperature, the pressure, the output intensity, the current, and the time, can be appropriately set by a person skilled in the art. In a case in which an enzyme is used, examples of the enzyme to be used include proteases that are classified into "metal proteases", "acidic proteases", "thiol proteases", and "serine proteases". The reaction can be carried out at a reaction temperature of from 20 to 80°C and preferably of from 40 to 60°C. In the case of a pH adjustment treatment, the treatment can be carried out in a pH range in which any pH values of 2, 2.5, 3, 3.5, 4, 4.5, 5, 5.5, 6, 6.5, 7, 7.5, 8, 8.5, 9, 9.5, 10, 10.5, 11, 11.5, and 12 are set as the upper limit and the lower limit, and for example, the pH range may be from 2 to 12. In the case of an acid treatment, the method may be a method of adding an acid or a method of carrying out fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food and/or drink containing an acid, such as a fruit juice of lemon or the like, a concentrated fruit juice, fermented milk, yogurt, or a brewed vinegar. In the case of an alkali treatment, an alkali, such as sodium hydroxide or potassium hydroxide, can be added. In the case of a denaturant treatment, a denaturant, such as guanidine hydrochloride, urea, arginine, or PEG, may be added. In the case of a heating or cooling treatment, examples of the heating temperature include temperature ranges that include any temperatures of 60°C, 70°C, 80°C, 90°C, 100°C, 110°C, 120°C, 125°C, 130°C, 135°C, 140°C, 145°C, and 150°C set as the upper limit and the lower limit, and for example, the temperature range may be from 60°C to 150°C. Examples of the cooling temperature include temperature ranges including any temperatures of -10°C, -15°C, -20°C, -25°C, -30°C, -35°C, -40°C, -45°C, -50°C, -55°C, -60°C, - 65°C, -70°C, and -75°C set as the upper limit and the lower limit, and for example, the temperature range may be from -10°C to -75°C. Examples of the heating or cooling time include time ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes set as the upper limit and the lower limit, and for example, the time range may be from 5 seconds to 200 minutes. In the case of a high-pressure treatment, examples of the pressure condition include pressure ranges including any pressures of 100 MPa, 200 MPa, 300 MPa, 400 MPa, 500 MPa, 600 MPa, 700 MPa, 800 MPa, 900 MPa, and 1000 MPa set as the upper limit and the lower limit, and for example, the pressure range may be from 100 MPa to 1000 MPa. In the case of an organic solvent treatment, examples of the solvent to be used include alcohols and ketones, such as, for example, ethanol and acetone. In the case of a mineral addition treatment, examples of the mineral to be used include divalent metal ions, such as calcium and magnesium. In the case of a supercritical treatment, the treatment can be implemented, for example, using carbon dioxide in a supercritical state at a temperature of about 30°C or higher and a pressure of about 7 MPa or higher. In the case of an ultrasonic treatment, the treatment can be carried out, for example, by irradiation at a frequency of from 100 KHz to 2 MHz with an output of from 100 to 1000 W. In the case of an electrolysis treatment, for example, an aqueous protein solution may be treated by application of a voltage of from 100 mV to 1000 mV. In a specific embodiment, the treatment for decomposing and/or denaturing a protein is selected from the denaturant treatment, the heating treatment, and combinations thereof.

In the treatment for adjusting the molecular weight distribution of a protein, conditions such as, for example, the type of filter medium, the carrier for gel filtration, the centrifugal rotation speed, the electric current, and the time, can be appropriately set by a person skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

### (Beverage)

In the present invention, the beverage refers to a product prepared from fruits or vegetables as raw materials, including their squeezed juices, ground juices, or extracts with water or hot water, or from grains or tea leaves as raw materials, including their extracts with water or hot water, alone or in combination. Furthermore, the beverage is obtained by adding a saccharide, a pigment, an aroma, or the like. The raw materials may be subjected to aging, fermentation, roasting, or other processing. Preferably, fruit juice, vegetable juice, coffee, or a mixture of one or more thereof is used.

### (Fruit Juice)

Here, the fruit juice is obtained by squeezing or grinding fruit. The fruit used as a raw material for the fruit juice is not particularly limited, and fruit commonly used in the art can be used. Specific examples thereof include citrus fruits such as orange, satsuma mikan, Citrus unshiu, navel orange, ponkan, Citrus natsudaidai (summer orange), lemon, grapefruit, lime, hassaku, iyokan, yuzu, camu-camu, Citrus depressa (shikuwasa), kabosu, mandarin, tangerine, temple orange, tangelo, and calamansi; as well as other fruits including strawberry, raspberry, blueberry, blackberry, blackcurrant, cherry, apple, grape, pomegranate, kiwi, muscat grape, peach, pineapple, guava, banana, passion fruit, mango, acerola, prune, papaya, plum, Japanese apricot (ume), pear, apricot, lychee, melon, watermelon, European pear, persimmon, loquat, fig, and various types of Prunus fruits. Among them, citrus fruits such as grapefruit and orange, grapes, and apples are preferable as the fruit juice from the viewpoint of vulnerability to photodegradation and the effectiveness of the present invention. The fruit juice may be obtained by using any one of the above fruits alone or two or more thereof in combination.

The fruit juice can be obtained by subjecting the above-described fruit to a pretreatment such as washing, sterilization, peeling, or pulverization as necessary, and then squeezing or grinding the fruit by a method known in the art. Examples of the known method include a method of squeezing and juicing a fruit, which is a raw material subjected to a pretreatment such as washing, sterilization, peeling, removal of skin, seeds and the like, crushing, and straining as necessary, using a hydraulic press machine, a roller squeezer, or an in-line squeezer, a method of crushing and squeezing a fruit using a pulper/finisher, and a method of crushing a fruit using a crusher or the like and then squeezing a fruit using an extractor or the like. Water or hot water may be further added before or after the crushing treatment. Active separation of fibers or the like may not be performed following pressing or grinding. Furthermore, the juice squeezed or ground according to these methods may be subjected to an enzyme treatment such as pectinase or cellulase, subjected to a juicer, or sterilized as desired. The fruit juice may be fermented with ethanol by adding yeast thereto, or ethanol prepared by another method may be added to the fruit juice to prepare fruit wine or a fruit juice-containing liquor.

In addition, the fruit juice may be concentrated if necessary, and as a concentration method in this case, for example, concentration by normal heating, concentration under reduced pressure, concentration at low temperature, vacuum concentration, freeze concentration, reverse osmosis concentration, and the like are known.

The preparation of the fruit juice described above can be omitted by obtaining a commercially available product. straight juice, straight fruit juice, juice from concentrate, purée, concentrated purée, and the like are commercially available. Here, the straight juice is a juice specified by the JAS standard, that is, a juice obtained by squeezing a fruit, or a juice to which only components permitted by the JAS standard are added. The straight fruit juice and the fruit juice from concentrate are obtained by squeezing fruit juice at a predetermined ratio, adding components permitted by the JAS standard to the squeezed fruit juice if necessary, and concentrating the juice at a predetermined ratio.

### (Vegetable juice)

Here, the vegetable juice is obtained by squeezing or grinding undried vegetables. The vegetable used as a raw material for the vegetable juice is not particularly limited, and vegetable commonly used in the art can be used. Specific examples thereof include carrots, onions, broccoli, turnip radishes, cabbage, sprouts, cabbage leaves, celery, spinach, bell peppers, asparagus, barley grass, garland chrysanthemums, Chinese cabbage, mustard spinach, salad vegetables, Japanese mustard spinach, bok choy leaves, tomorrow's leaves, sweet potato, tomato, moroheiya, paprika, watercress, parsley, celery, three leaves, lettuce, radishes, kale, cabbage leaves, perilla, eggplant, Japanese radishes, beans, pumpkin, burdock root, green onion, ginger, garlic, Chinese chive, leaf mustard, cauliflower, corn, sugar peas, okra, turnip, cucumber, collaby, cucurbits, zucchini, navel, bean sprouts, various kinds of sprouts, and the like. Among them, from the viewpoint of the vulnerability to photodegradation and the effectiveness of the present invention, it is preferable that the vegetable juice is a mixture of green vegetables such as kale, barley grass, young wheat leaves, tomorrow's leaves, young mulberry leaves, spinach, moroheiya, cabbage, and kale, so-called green juice. The vegetable juice may be obtained by using any one of the above vegetable alone or two or more thereof in combination. When two or more vegetables are used in combination, the ratio of each vegetable (vegetable juice) can be appropriately adjusted as necessary, and is not particularly limited.

The vegetable juice can be obtained by squeezing the above-described vegetables by a method known in the art. Examples of the known method include a method of squeezing and juicing a fruit, which is a raw material subjected to a pretreatment such as washing, sterilization, peeling, removal of skin, seeds and the like, blanching, crushing, and straining as necessary, using a hydraulic press machine, a roller squeezer, or an in-line squeezer, a method of crushing and squeezing vegetable using a pulper/finisher, and a method of crushing vegetable using a crusher or the like and then squeezing a fruit using an extractor or the like. Water or hot water may be further added before or after the crushing treatment. Active separation of fibers or the like may not be performed following pressing or grinding. Furthermore, the juice squeezed (juiced) according to these methods may be subjected to an enzyme treatment such as pectinase or cellulase, subjected to a juicer, or sterilized as desired. In addition, the vegetable juice may be concentrated if necessary, and as a concentration method in this case, for example, concentration by normal heating, concentration under reduced pressure, concentration at low temperature, vacuum concentration, freeze concentration, reverse osmosis concentration, and the like are known.

The preparation of the vegetable juice described above can be omitted by obtaining a commercially available product. Straight vegetable juice, mixed vegetable juice, paste, puree, concentrated puree, and the like are available as commercially available products. Here, the straight vegetable juice is itself obtained by squeezing a single vegetable. The mixed vegetable juice is obtained by squeezing a plurality of vegetables.

### (Extract of Grains or Tea Leaves)

Examples of the grains include coffee beans, soybean, rice, buckwheat, and barley. Grains or tea leaves are directly subjected to operations such as aging, fermentation, and roasting, and then extracted from a dried product with water or hot water, and fibers and the like are separated if necessary. Typical examples thereof include coffee, barley tea, green tea, black tea, and oolong tea.

### (Coffee)

In the present invention, the "coffee and coffee beverage" includes a beverage using coffee beans as a raw material and a beverage obtained by adding sugars, dairy products, emulsified edible oil and/or fat, and other edible materials to the beverage and sealing the mixture in a container, as described in "Fair Competition Code for Labeling of Coffee-Containing Beverages and the Like" established in 1977. According to the "Fair Competition Code for Labeling of Drinking Milk", as of 2017, beverages containing components having a milk solids content of 3.0% or more based on weight percentage are treated as "milk beverages", and as long as the definition of "coffee beverages" is satisfied, such "milk beverages" are also included in the "coffee beverages" of the present invention.

### (Fatty acid esters of ascorbic acid)

In the present invention, the effect of suppressing flavor deterioration can be improved by using a fatty acid ester of ascorbic acid in combination. Examples of the fatty acid ester of ascorbic acid include ascorbyl palmitate and ascorbyl stearate.

### (Water-Soluble Polysaccharide Derived from Fabaceae Plant)

In the present invention, the effect of suppressing flavor deterioration can be improved by using a water-soluble polysaccharide derived from a *Fabaceae* plant in combination.

The water-soluble polysaccharide derived from a *Fabaceae* plant used in the present invention is a water-soluble acidic polysaccharide, and can be obtained from the *Fabaceae* plants such as soybean, pea, azuki bean, Asparagus bean, green bean, broad bean, chickpea, and lentil, and these can be used alone or in combination of two or more thereof. Preferably, the plant is derived from soybean or pea.

A preferred example of the production method when the water-soluble polysaccharide is derived from soybean is as follows. A soybean-derived raw material such as okara is thermally decomposed under acidic or alkaline conditions, preferably at a pH of 3 to 6 and a temperature of preferably 80°C or more and 150°C or less, more preferably higher than 100°C and 130°C or less to extract a water-soluble soybean polysaccharide, and this is subjected to solid-liquid separation by centrifugation or the like, thereby obtaining a water-soluble fraction. The water-soluble fraction is dried as it is, or subjected to, for example, an activated carbon treatment, a resin adsorption treatment, or an ethanol precipitation treatment to remove a hydrophobic substance or a low molecular weight substance, and then dried, and thus a water-soluble soybean polysaccharide can be obtained.

When the water-soluble polysaccharide is derived from peas, a water-soluble pea polysaccharide can be obtained by the method described in WO 2012/176852 A or WO 2014/103833 A, for example.

### (Blending ratio)

The blending will be described below. The flavor deterioration inhibitor of the present invention is preferably contained in an amount of 0.001 to 0.15 mass% (10 to 1500 ppm) in the beverage. The content is further preferably from 0.003 to 0.08 mass% (30 to 800 ppm), and most preferably from 0.004 to 0.03 mass% (40 to 300 ppm). When the content is from 0.001 to 0.15 mass% (10 to 1500 ppm), an excellent effect of suppressing flavor deterioration is obtained.

In the present invention, the effect of suppressing flavor deterioration can be further improved when the fatty acid ester of ascorbic acid is contained in an amount of 0.0005 to 0.1 mass% (5 to 1000 ppm) in the beverage. The content is preferably from 0.001 to 0.05 mass% (10 to 500 ppm), and more preferably from 0.002 to 0.04 mass% (20 to 400 ppm). When the content is from 0.0005 to 0.1 mass% (5 to 1000 ppm), an excellent effect of suppressing flavor deterioration can be obtained, with excellent cost effectiveness.

In the present invention, the effect of suppressing flavor deterioration can be further improved when the water-soluble polysaccharide derived from a *Fabaceae* plant is contained in an amount of 0.0001 mass% (1 ppm) or more in the beverage. The content is preferably 0.0002 mass% (2 ppm) or more, and more preferably 0.001 mass% (10 ppm) or more. Although not specifically defined, the upper limit may be set to 1 mass%(10000 ppm) or less, 0.3 mass% (3000 ppm) or less, 0.1 mass% (1000 ppm) or less, or 0.03 mass% (300 ppm) or less. By setting the content within the ranges, an excellent effect of suppressing flavor deterioration can be obtained, with excellent cost effectiveness.

### (Other Components)

The beverage of the present embodiment may further contain other components known in the art. Examples of such other components include water other than water derived from vegetables and fruits (such as mineral water, natural water, ion-exchanged water, purified water, degassed water, and tap water), saccharides such as fructose glucose, acidulants such as acids, sweeteners such as sorbitol and aspartame, amino acids, electrolyte solutions, enzymes, thickeners, stabilizers such as pectin, coloring agents such as natural dyes and synthetic dyes, reinforcing agents such as vitamins, minerals such as zinc, calcium, iron, copper, and magnesium, or salts thereof, pH adjusting agents, antioxidants, coloring agents such as natural dyes and synthetic dyes, aroma such as natural aroma and synthetic aroma, and other beverages including carbon dioxide, ethanol, and ethanol.

Among these, examples of components allowed by the JAS standard include reinforcing agents such as vitamins and minerals, salts thereof, sugar, honey, and natural aroma. Specific examples of the saccharide include, but are not particularly limited to, sugar, isomerized sugar, fructose, glucose, maltose, lactose, trehalose, natural saccharide, and sugar alcohols. Specific examples of the acidulant include, but are not particularly limited to, citric acids, ascorbic acids, malic acids, tartaric acids, and lactic acids. These components can be used alone or in combination of two or more thereof. The other components that can be added as described above are also described, for example, in (edited by the Food Indication Study Group, published by Central Legal Affairs Bureau, revised in February 1989).

### (Sterilization)

When heat sterilization is performed before or after filling a beverage in a container according to an aspect of the present invention, the type of heat sterilization is not particularly limited, and the heat sterilization can be performed using a usual method such as falling sterilization, UHT sterilization, and retort sterilization. The temperature of the heat sterilization step is not particularly limited, and is, for example, from 65 to 130°C, preferably from 80 to 120°C, for 1 to 40 minutes. However, if a sterilization value equivalent to the above conditions is obtained, there is no problem even in sterilization at 115°C for several seconds, for example, from 5 to 60 seconds.

### (Production of Beverage)

An example of a preparation method will be described below. First, a protein material and, if necessary, a fatty acid ester of ascorbic acid are added to water and dissolved. The temperature of water to be used is not particularly limited, and warm water is preferable, and from 40 to 80°C is suitable.

If necessary, water and/or a water-soluble polysaccharide derived from a *Fabaceae* plant is added to one or more selected from fruit juice, vegetable juice, and coffee and dissolved by stirring or the like. The temperature of water to be used is not particularly limited, and cold water is preferable, and from 5 to 15°C is suitable.

These are components, and if necessary, subjected to filling and sterilization. The order of the filling and sterilization steps is not limited.

Alternatively, the raw materials may be mixed at the same time and dissolved by stirring or the like. If necessary, the mixture is filled and sterilized. The order of the filling and sterilization steps is not limited.

The properties of the flavor deterioration inhibitor of the present invention are specified by the following procedure.

### <Crude protein content>

The crude protein content is measured by the Kjeldahl method. Specifically, the mass of nitrogen measured by the Kjeldahl method relative to the mass of a protein material is represented by "mass%" as a crude protein content of the dried product. The nitrogen conversion coefficient is 6.25. Basically, the value is obtained by rounding off the value to the first decimal place.

### <NSI>

60 mL of water is added to 3 g of protein material sample and stirred with a propeller at 37°C for 1 hour, then centrifuged at 1400 × g for 10 minutes to collect a supernatant (I). Subsequently, 100 mL of water is added again to the remaining precipitate, and the mixture is stirred again with a propeller at 37°C for 1 hour and then centrifuged to collect a supernatant (II). The supernatants (I) and (II) are combined, water is added to the combined liquid, and thus the mixed liquid has a volume of 250 mL. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen collected as the filtrate (water-soluble nitrogen) to the total amount of nitrogen in the sample is expressed in mass% and is defined as the NSI. Basically, the value is obtained by rounding off the value to the first decimal place.

### <TCA solubilization percentage>

A TCA solubilization percentage is a value obtained by adding, to a 2 mass% aqueous solution of a protein material, an equal amount of 0.44 M trichloroacetic acid (TCA) to prepare a 0.22 M TCA solution, and measuring the ratio of soluble nitrogen by the Kjeldahl method. Basically, the value is obtained by rounding off the value to the first decimal place.

### <Viscosity (viscosity after heating)>

The viscosity of the protein material is measured using a B-type viscometer (Type BM available from TOKISANGYO). An aqueous protein material solution is prepared so as to have a crude protein content of 20 mass%, and charged in a measurement container, a rotor is set, and the container is sealed, and then heated at 80°C for 30 minutes in a hot water bath. Next, the viscosity is measured at a predetermined rotation speed at 25°C, the pointer value is read, and the viscosity is calculated by multiplying a rotor No. and a conversion multiplier corresponding to the rotation speed. (Unit: Pa·s) The measured value after 1 minute is used. Basically, the rotation speed is set to 60 rpm. For a sample having a high viscosity, the rotor No. is changed from 1 to 4, and the rotation speed is decreased to 6 rpm. A measurement upper limit viscosity in this measurement is 100000 mPa·s. When the rotor No. 4 and the rotation speed of 6 rpm exceed the measurement range, the viscosity after heating is immediately determined to be 100000 mPa·s or more.

### Examples

Hereinafter, the present invention will be described in more detail with reference to Examples, but the spirit of the present invention is not limited to these Examples at all. In Examples, "part(s)" and "%" are on a mass basis.

### <Raw Materials>

The raw materials used in Examples and Comparative Examples are as described below.

### (Protein material)

The following materials were used as protein materials.
Soybean protein material A: "MIRA-MAP 2.0", available from Fuji Oil Co., Ltd., crude protein content: 79.3%, TCA solubilization percentage: 61.8%, viscosity after heating: 28 mPa·s, NSI: 98.1)
Pea protein material A: product obtained by degradation/denaturation and molecular weight distribution adjustment treatment of pea protein. (Test product, Fuji Oil Co., Ltd., water content: 1.1%, crude protein content: 72.4%, TCA solubilization percentage: 45.9%, viscosity after heating: 43 mPa·s, NSI: 98.9), raw material pea protein: PP-CS (available from ORGANO FOODTECH CORPORATION, crude protein content: 79.1%)

Below are protein materials used as comparative examples, which do not satisfy the requirements of the present invention.
Soy protein material B: "FUJIPRO R", available from Fuji Oil Co., Ltd., crude protein content: 87.2%, TCA solubilization percentage: 12.2%, viscosity after heating: 100000 mPa·s or more, NSI: 81.2)
Soy protein material C: "FUJIPRO CL", available from Fuji Oil Co., Ltd., crude protein content: 88.0%, TCA solubilization percentage: 23.0%, viscosity after heating: 100000 mPa·s or more, NSI: 65.0)
Soybean peptide material A: "HINUTE DC6", available from Fuji Oil Co., Ltd., crude protein content: 90.0%, TCA solubilization percentage: 100.0%, viscosity after heating: 17 mPa·s, NSI: 100)
Sodium caseinate: "Sodium Caseinate 180", available from Fonterra Co-operative Group Limited, crude protein content: 92.3%,
TCA solubilization percentage: 0.0%, viscosity after heating: 100000 mPa·s or more, NSI 98.1)

### (Additional Raw Material)

The following commercially available products were used as the other raw materials.
L-ascorbic acid palmitic acid ester: L-ascorbic acid palmitic acid ester, available from DSM
Water-soluble soybean polysaccharide: "SOYAFIBE-S-DA 100", available from Fuji Oil Co., Ltd.
L-ascorbic acid: L-ascorbic acid, available from FUJIFILM Wako Pure Chemical Corporation
55° BX transparent red grape juice available from JAPAN FRUIT PROCESSING COMPANY LIMITED.
58° BX grapefruit juice, available from JAPAN FRUIT PROCESSING COMPANY LIMITED.
40° BX cloudy apple juice, available from JAPAN FRUIT PROCESSING COMPANY LIMITED.
64° BX cloudy orange juice, available from JAPAN FRUIT PROCESSING COMPANY LIMITED.
Tomato puree, available from KAGOME CO., Ltd.
Green juice beverage, available from ITO EN, LTD.

The raw materials are listed as vegetable juice (barley grass, kale), barley grass powder, matcha, zinc yeast/polysaccharide thickener, and vitamin E.

Wine, available from Mercian Corporation

Coffee beans from Colombia, available from CAMEL COFFEE Co., Ltd.

### <Production and Evaluation of Grape Juice-Containing Beverage>

The components were mixed at the ratios show in Table 1, and the mixture was placed in a PET bottle and sterilized by heating at 85°C for 30 minutes. The flavor derived from the inhibitor before the deterioration test was evaluated using the obtained grape juice-containing beverage. Subsequently, the sample was held under the conditions of 5°C and an LED light source of 40000 Lx for 72 hours, and then a photodegradation odor was evaluated. Note that the additive-free sample of Comparative Example 1 stored in the dark was used as Reference Example 1 for evaluation. The test group in which the evaluation of the flavor derived from the inhibitor was 3 points or more and the evaluation of the photodegradation odor was 3 points or more was comprehensively determined to be acceptable. Furthermore, the square of the flavor evaluation point and the square of the photodegradation odor evaluation point were summed up to obtain an overall evaluation score. The overall evaluation score was used as a guide in further ranking the acceptable samples. The results are summarized in Table 1.

### (Evaluation Criteria for Flavor Derived from Inhibitor)

On the additive-free group and Reference Example 1 before the deterioration test, 10 skilled panelists made each evaluation, and the evaluation was made by the average value of the evaluation points. The higher the score, the better the original flavor of the beverage, and the weaker the flavor different from the original flavor of the beverage.
5 points: equivalent to the reference example, with no perceptible flavor derived from the inhibitor and no impairment of the original flavor of the beverage
4 points: very slightly perceptible flavor derived from the inhibitor as compared to the reference example, with no impairment of the original flavor of the beverage
3 points: slightly perceptible flavor derived from the inhibitor as compared to the reference example, with no impairment of the original flavor of the beverage 2 points: perceptible flavor derived from the inhibitor as compared to the reference example, with slight impairment of the original flavor of the beverage
1 point: strongly perceptible flavor derived from the inhibitor as compared to the reference example, with impairment of the original flavor of the beverage

### (Evaluation Criteria of Photodegradation Odor)

On the additive-free group and Reference Example 1 stored in the dark, 10 skilled panelists made each evaluation, and the evaluation was made by the average value of the evaluation points. The higher the score, the better the original flavor of the beverage and the weaker the photodegradation odor.
7 points: equivalent to the reference example, the original flavor of the beverage retained, with no photodegradation odor
6: very slightly inferior original flavor of the beverage to that of the reference example, with barely perceptible photodegradation odor
5: slightly inferior original flavor of the beverage to that of the reference example, with slightly perceptible photodegradation odor
4 points: slightly reduced original flavor of the beverage, as compared to that of the reference example, with slightly perceptible photodegradation odor
3 points: inferior original flavor of the beverage to that of the reference example, with
slightly perceptible photodegradation odor but overall product quality remained within acceptable
2 points: very poor original flavor of the beverage as compared to that of the reference
example, with perceptible photodegradation odor
1 point: significantly inferior original flavor of the beverage to that of the reference example, with slightly perceptible photodegradation odor

### <Analysis of Effect of Suppressing Photodegradation>

The aroma analysis of each beverage obtained in Examples and Comparative Examples was performed under the following conditions. The effects were discussed by comparing the peak intensities.

### (Analysis Conditions of Aroma Component)

o SPME (solid phase microextraction) conditions

A sample was extracted into a 20 ml vial.
Fiber used: DVB/PDMS/CAR, 1 cm
Extraction conditions: incubation at 60°C for 30 minutes → adsorption at 60°C for 30 minutes → desorption at 240°C for 1 minute
Baking conditions: 250°C, 30 minutes
o GC-TOF-MS (gas chromatograph-time-of-flight mass spectrometer) analysis conditions
MS: PegasusBT (available from LECO Japan Corporation), GC: Agilent 7890B (available from Agilent Technologies, Inc.), AS: MPS robotic pro (available from GERSTEL GmbH & Co.KG)
Column: Stabilwax, available from RESTEK Corporation, length: 30 m, inner diameter: 0.25 mm, liquid phase film thickness: 0.5 µm
Column temperature: 40°C (2 min) → 12°C/min → 240°C (10 min)
Carrier gas control: constant flow rate, injection method: splitless
Column flow rate: 1.0 ml/min
Interface temperature: 250°C, ion source temperature: 230°C
Data acquisition rate: 20 spectra/s
Ionization voltage: 70eV, detector gain: 2190 V
o Analysis conditions

Analysis was performed with Chroma TOF BT (LECO), and the component name was estimated with the NIST library.

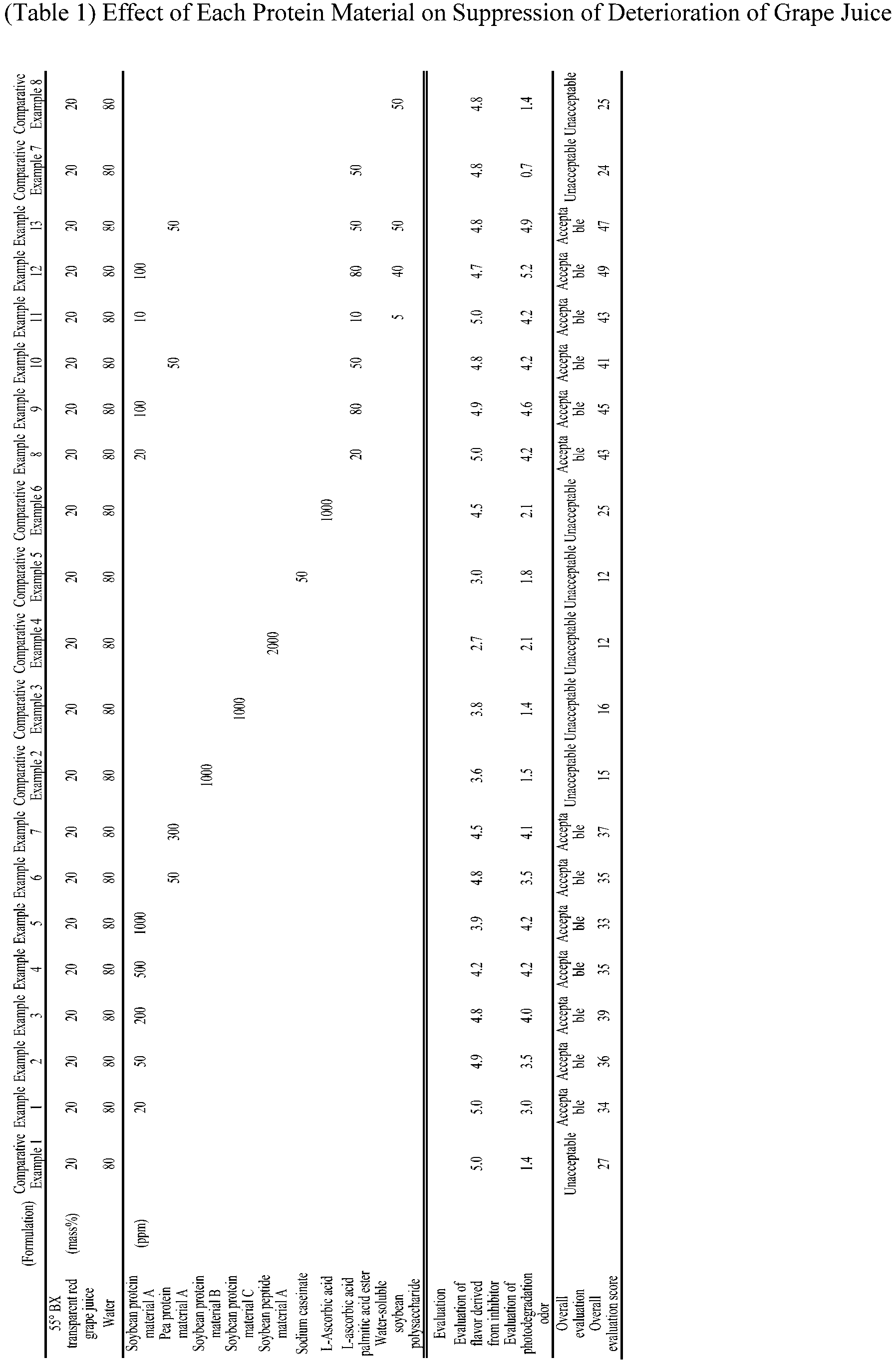

As is understood from Examples in Table 1, in the grape juice-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination.

As is understood from Comparative Examples in Table 1, the photodegradation odor could not be sufficiently suppressed in all cases not containing a protein material having the specific properties defined in the present invention.

**(Table 2) Aroma Component Analysis**

| | | Reference Example 1 | Example 12 | Example 9 | Example 3 | Comparative Example 6 | Comparative Example 1 | Pearson product-moment correlation coefficient with photodegradation odor |
|---|---|---|---|---|---|---|---|---|
| | Storage condition | Storage in dark place for 72 hr | 40000 Lx, stored for 72 hr | | | | | |
| | Evaluation of photodegradation odor | 7.0 | 5.2 | 4.6 | 4.0 | 2.1 | 1.4 | |
| (Good flavor component) | | (Integrated value) | | | | | | |
| Isopentyl butyrate | | 727,726 | 638,990 | 632,935 | 574,997 | 454,014 | 406,976 | 0.99 |
| (Z)-3-Hexenyl acetate | | 6,881,262 | 5,965,782 | 5,665,566 | 5,450,970 | 4,247,523 | 4,093,562 | 1.00 |
| Ethyl decanoate | | 22,624,702 | 15,901,212 | 13,190,972 | 10,777,556 | 4,283,754 | 2,921,165 | 1.00 |
| Ethyl valerate | | 26,230,982 | 21,425,098 | 20,626,542 | 21,621,255 | 16,457,589 | 16,054,110 | 0.97 |
| 3-Methyl-2 butanol | | 47,426,453 | 46,633,630 | 41,655,475 | 41,128,074 | 40,943,445 | 37,219,861 | 0.91 |
| Ethyl 2-methylbutyrate | | 237,833,837 | 222,975,004 | 218,321,225 | | 183,001,067 | 193,370,268 | 0.94 |
| Methyl anthranilate | | 561,258,355 | 526,312,231 | 473,394,593 | | 424,976,637 | 425,722,086 | 0.96 |
| (Bad flavor component) (Z)-2-Decenal | | 0 | 9,433,319 | 9,474,401 | 13,740,910 | 17,591,625 | 18,399,636 | -0.97 |
| 3,3-Dimethylheptanoic acid | | 1,327,217 | 1,875,263 | 1,907,085 | 2,172,834 | 2,521,797 | 2,936,928 | -0.99 |
| 3-Penten-2-one | | 476,159 | 1,673,141 | 1,491,330 | 1,701,520 | 1,956,804 | 2,437,229 | -0.93 |
| Pelagornic acid | | 70,696 | 34,467,467 | 32,553,716 | 31,316,052 | 136,871,055 | 92,085,514 | -0.88 |
| trans-2-Undecenal | | 11,799 | 2,424,862 | 2,077,527 | 3,099,387 | 4,719,020 | 6,106,827 | -0.98 |

For representative aroma components, the Pearson product-moment correlation coefficient between the integrated value of the peak intensity and the evaluation point of the photodegradation odor was determined and shown in Table 2 together with the integrated value. In Examples, a decrease in isopentyl butyrate, (Z)-3 hexenyl acetate, ethyl decanoate, ethyl valerate, 3-methyl -2 butanol, ethyl 2-methylbutyrate, and methyl anthranilate, which are known as good flavor components contained in the grape juice, was suppressed, and a positive correlation was also observed with the evaluation point of the photodegradation odor. In addition, production of (Z)-2 decenal, 3,3-dimethylheptanoic acid, 3-penten-2 one, pelagornic acid, and trans-2-undecenal, which are known as malodorous components, was suppressed, and a negative correlation was also observed with the evaluation point of photodegradation odor. From these results, it was considered that a protein material having specific properties defined in the present invention functions as an effective flavor deterioration inhibitor.

### <Production and Evaluation of Grapefruit Juice-Containing Beverage>

The components were mixed at the ratios show in Table 3, and the mixture was placed in a PET bottle and sterilized by heating at 85°C for 30 minutes. The flavor derived from the inhibitor before the deterioration test was evaluated using the obtained grapefruit juice-containing beverage. Subsequently, the sample was held under the conditions of 5°C and an LED light source of 40000 Lx for 72 hours, and then a photodegradation odor was evaluated. Note that the additive-free sample of Comparative Example 9 stored in the dark was used as Reference Example 2 for evaluation. The test group in which the evaluation of the flavor derived from the inhibitor was 3 points or more and the evaluation of the photodegradation odor was 3 points or more was comprehensively determined to be acceptable. The results are summarized in Table 3.

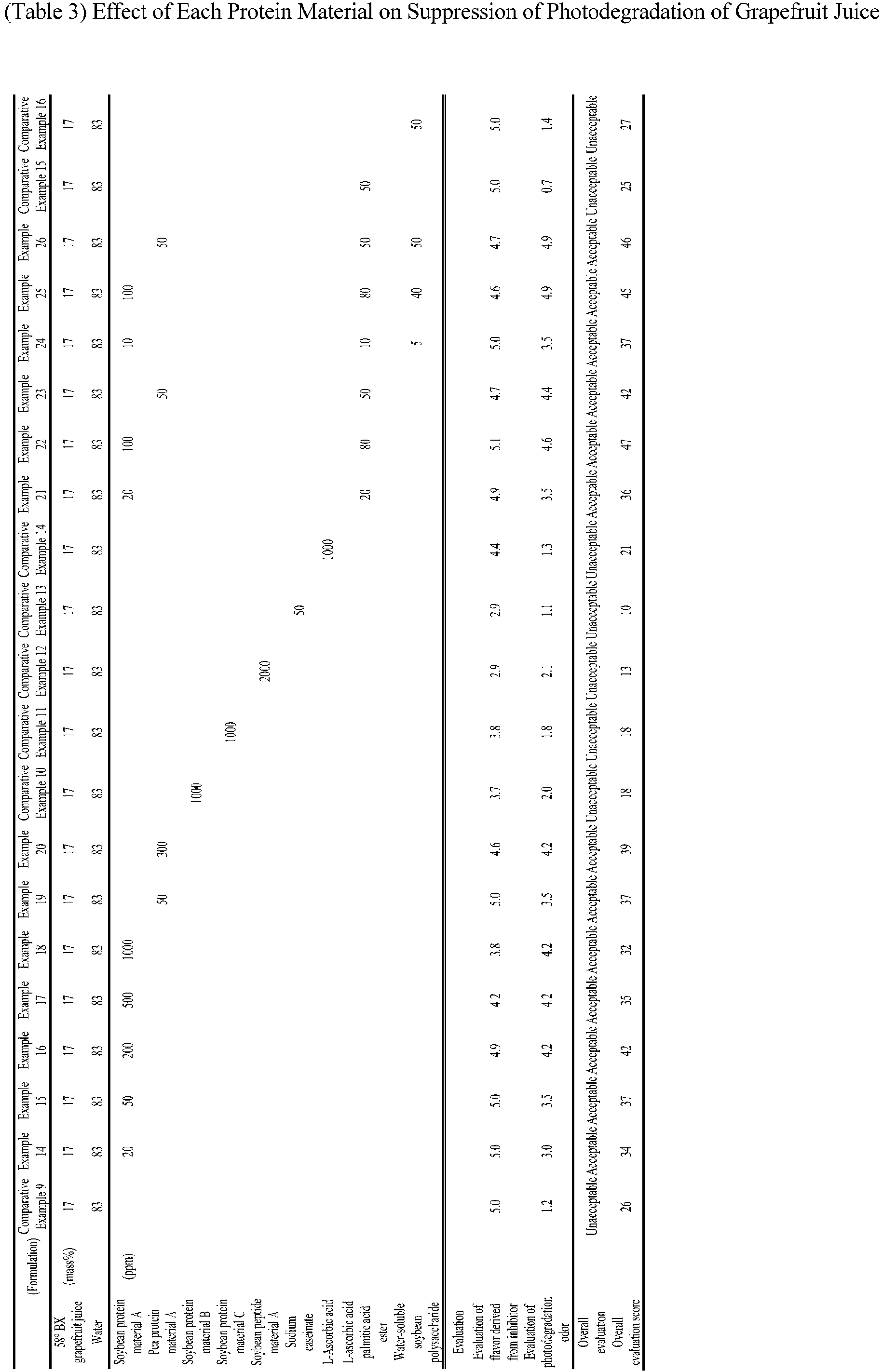

As is understood from Examples in Table 3, in the grapefruit juice-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination.

As is understood from Comparative Examples in Table 3, the photodegradation odor could not be sufficiently suppressed in all cases not containing a protein material having the specific properties defined in the present invention.

**(Table 4) Aroma Component Analysis**

| | | Reference Example 2 | Example 25 | Example 22 | Example 15 | Comparative Example 12 | Comparative Example 9 | Pearson product-moment correlation coefficient with photodegradation odor |
|---|---|---|---|---|---|---|---|---|
| | Storage condition | Storage in dark place for 72 hr | 40000 Lx, stored for 72 hr | | | | | |
| | Evaluation of photodegradation odor | 7.0 | 4.9 | 4.6 | 3.5 | 2.1 | 1.2 | |
| (Good flavor component) | | (Integrated value) | | | | | | |
| Citronellol | | 278,552,075 | 240,452,352 | 225,345,932 | 206,092,957 | 121,494,581 | 95,078,363 | 0.970 |
| Ethyl 2-methylbutyrate | | 3,301,768 | 2,591,690 | 2,489,791 | 2,329,044 | 1,461,630 | 1,046,245 | 0.984 |
| α-Ocimene | | 204,744,905 | 153,814,243 | 146,205,553 | 128,604,476 | 81,420,149 | 59,948,987 | 0.996 |
| N-cinnamoylglycin | | 1,953,868 | 1,461,721 | 1,390,008 | 1,211,969 | 490,616 | 2,341 | 0.972 |
| Limonene | | 9,470,439,891 | 7,497,563,169 | 7,241,111,318 | 6,905,858,057 | 5,141,032,675 | 4,757,371,597 | 0.991 |
| Myrcene | | 1,295,475,712 | 962,657,307 | 911,844,682 | 787,298,627 | 381,977,906 | 134,113,738 | 0.985 |
| Caryophyllene | | 16,251,596 | 12,673,396 | 12,192,534 | 11,368,996 | 7,255,415 | 5,404,862 | 0.987 |
| Mesitylene | | 586,281 | 416,710 | 398,962 | 308,925 | 196,078 | 126,231 | 1.000 |
| α-Pinene | | 23,124,395 | 17,561,970 | 16,754,493 | 14,999,431 | 11,068,957 | 10,136,513 | 0.995 |
| Nootkatone | | 83,501,073 | 75,306,443 | 75,347,195 | 83,889,767 | 60,548,868 | 53,970,052 | 0.827 |
| Humulene | | 103,398,662 | 79,219,247 | 75,762,644 | 68,799,789 | 39,360,864 | 23,665,974 | 0.985 |
| | | 2,914,271 | 1,890,299 | 1,709,365 | 1,082,908 | 765,433 | 651,297 | 0.979 |
| 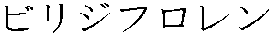 β-Sinensal | | 11,113,086 | 7,212,433 | 6,515,703 | 6,139,725 | 3,176,725 | 3,032,719 | 0.981 |
| α-Terpinene | | 629,666 | 446,017 | 424,048 | 327,961 | 253,178 | 233,279 | 0.986 |
| Linalool | | 223,281,130 | 184,319,424 | 180,165,022 | 181,697,148 | 147,063,704 | 148,755,231 | 0.964 |
| (Bad flavor component) | | | | | | | | |
| Heptanal | | 1,737,383 | 1,855,326 | 1,931,679 | 2,466,588 | 6,894,956 | 11,799,220 | -0.843 |
| 2,4-Hexadienal | | 529,631 | 484,834 | 493,974 | 550,046 | 1,133,225 | 1,818,505 | -0.814 |
| Pelargonic acid | | 3,118,428 | 2,743,707 | 2,729,435 | 2,961,234 | 6,219,636 | 10,068,520 | -0.795 |
| Methylheptenone | | 5,319,666 | 9,388,291 | 10,541,612 | 16,821,146 | 17,568,942 | 21,670,714 | -0.975 |
| 2-Nonanone | | 382,604 | 669,694 | 760,057 | 1,195,979 | 3,485,005 | 5,993,831 | -0.876 |
| 3-Hexen-1-ol | | 416,445 | 543,610 | 588,089 | 838,468 | 2,776,848 | 4,881,632 | -0.854 |
| 2,4-Decadienal | | 2,485,796 | 3,184,095 | 3,426,106 | 4,852,994 | 10,888,438 | 17,884,666 | -0.876 |
| Methacrolein | | 970,238 | 2,205,468 | 2,545,014 | 4,300,874 | 10,191,807 | 16,940,622 | -0.899 |
| 4-Isopropylcyclohexanone perillaldehyde | | 7,128,858 | 41,380,339 | 50,130,843 | 94,539,775 | 121,457,803 | 167,277,925 | -0.980 |

As is understood from the analysis examples in Table 4, in Examples, the decrease in citronellol, ethyl 2-methylbutyrate, α-ocimene, N-cinnamoyl glycine methyl, limonene, myrcene, caryophyllene, mesitylene, α-pinene, notocatone, fumulene, viridiflorene, β-sinensal, α-terpinene, and linalool, which are known as good flavor components contained in grapefruit juice, was suppressed, and a positive correlation was observed with the evaluation point of photodegradation odor. In addition, the production of heptanal, 2,4-hexadienal, pelargonic acid, methylheptenone, 2-nonanone, 3-hexen-1 ol, 2,4-decadienal, methacrolein, and 4-isopropylcyclohexanone perillaldehyde, which are known as malodorous components, was suppressed, and a negative correlation was also observed with the evaluation point of photodegradation odor. From these results, it is considered that a protein material having specific properties defined in the present invention functions as an effective flavor deterioration inhibitor.

### <Production and Evaluation of Apple Juice-Containing Beverage>

The components were mixed at the ratios show in Table 5, and the mixture was placed in a PET bottle and sterilized by heating at 85°C for 30 minutes. The flavor derived from the inhibitor before the deterioration test was evaluated using the obtained apple juice-containing beverage. Subsequently, the sample was held under the conditions of 5°C and an LED light source of 40000 Lx for 72 hours, and then a photodegradation odor was evaluated. Note that the additive-free sample of Comparative Example 17 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 5.

**(Table 5) Effect of Each Protein Material on Suppression of Photodegradation of Apple Juice**

| | (Formulation) | Comparative Example 17 | Example 27 | Example 28 | Comparative Example 18 | Comparative Example 19 | Example 29 | Example 30 |
|---|---|---|---|---|---|---|---|---|
| 40° BX cloudy apple juice | (mass%) | 25 | 25 | 25 | 25 | 25 | 25 | 25 |
| Water | | 75 | 75 | 75 | 75 | 75 | 75 | 75 |
| Soybean protein material A | (ppm) | | 50 | | | | 100 | 100 |
| Pea protein material A | | | | 50 | | | | |
| Soybean protein material B | | | | | | | | |
| Soybean protein material C | | | | | | | | |
| Soybean peptide material A | | | | | 500 | | | |
| Sodium caseinate | | | | | | | | |
| L-Ascorbic acid | | | | | | 1000 | | |
| L-ascorbic acid palmitic acid ester | | | | | | | 80 | 80 |
| Water-soluble soybean polysaccharide | | | | | | | | 40 |
| Evaluation | | | | | | | | |
| Evaluation of flavor derived from inhibitor | | 5.0 | 4.8 | 4.8 | 4.0 | 4.7 | 4.9 | 4.9 |
| Evaluation of photodegradation odor | | 1.2 | 3.2 | 3.2 | 1.3 | 1.3 | 3.5 | 4.2 |
| Overall evaluation | | Unacceptable | Acceptable | Acceptable | Unacceptable | Unacceptable | Acceptable | Acceptable |
| Overall evaluation score | | 26 | 33 | 33 | 18 | 24 | 36 | 42 |

As is understood from Examples in Table 5, in the apple juice-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination. As is understood from Comparative Examples, ascorbic acid or the soybean peptide material alone could not sufficiently suppress the photodegradation odor.

<Production and Evaluation of Orange Juice-Containing Beverage>

The components were mixed at the ratios show in Table 6, and the mixture was placed in a PET bottle and sterilized by heating at 85°C for 30 minutes. The flavor derived from the inhibitor before the deterioration test was evaluated using the obtained orange juice-containing beverage. Subsequently, the sample was held under the conditions of 5°C and an LED light source of 40000 Lx for 120 hours, and then a photodegradation odor was evaluated. Note that the additive-free sample of Comparative Example 20 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 6.

**(Table 6) Effect of Each Protein Material on Suppression of Photodegradation of Orange Juice**

| | (Formulation) | Comparative Example 20 | Example 31 | Example 32 | Comparative Example 21 | Comparative Example 22 | Example 33 | Example 34 |
|---|---|---|---|---|---|---|---|---|
| 64° BX cloudy orange juice | (mass%) | 17 | 17 | 17 | 17 | 17 | 17 | 17 |
| Water | | 83 | 83 | 83 | 83 | 83 | 83 | 83 |
| Soybean protein material A | (ppm) | | 50 | | | | 100 | 100 |
| Pea protein material A | | | | 50 | | | | |
| Soybean protein material B | | | | | | | | |
| Soybean protein material C | | | | | | | | |
| Soybean peptide material A | | | | | 500 | | | |
| Sodium caseinate | | | | | | | | |
| L-Ascorbic acid | | | | | | 1000 | | |
| L-ascorbic acid palmitic acid ester | | | | | | | 80 | 80 |
| Water-soluble soybean polysaccharide | | | | | | | | 40 |
| Evaluation | | | | | | | | |
| Evaluation of flavor derived from inhibitor | | 5.0 | 4.9 | 4.7 | 4.6 | 4.6 | 4.9 | 4.7 |
| Evaluation of photodegradation odor | | 1.2 | 3.2 | 3.3 | 1.2 | 1.2 | 3.5 | 3.6 |
| Overall evaluation | | Unacceptable | Acceptable | Acceptable | Unacceptable | Unacceptable | Acceptable | Acceptable |
| Overall evaluation score | | 26 | 34 | 33 | 23 | 23 | 36 | 35 |

As is understood from Examples in Table 6, in the orange juice-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination. As is understood from Comparative Examples, ascorbic acid or the soybean peptide material alone could not sufficiently suppress the photodegradation odor.

### <Production and Evaluation of Tomato Juice-Containing Beverage>

The components were mixed at the ratios show in Table 7, and the mixture was placed in a PET bottle and sterilized by heating at 85°C for 30 minutes. The flavor derived from the inhibitor before the deterioration test was evaluated using the obtained tomato juice-containing beverage. Subsequently, the sample was held under the conditions of 5°C and an LED light source of 40000 Lx for 72 hours, and then a photodegradation odor was evaluated. Note that the additive-free sample of Comparative Example 23 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 7.

**(Table 7) Effect of Each Protein Material on Suppression of Photodegradation of Tomato Juice**

| | (Formulation) | Comparative Example 23 | Example 35 | Example 36 | Comparative Example 24 | Comparative Example 25 | Example 37 | Example 38 |
|---|---|---|---|---|---|---|---|---|
| Tomato purée | (mass%) | 34 | 34 | 34 | 34 | 34 | 34 | 34 |
| Water | | 66 | 66 | 66 | 66 | 66 | 66 | 66 |
| Soybean protein material A | (ppm) | | 50 | | | | 100 | 100 |
| Pea protein material A | | | | 50 | | | | |
| Soybean protein material B | | | | | | | | |
| Soybean protein material C | | | | | | | | |
| Soybean peptide material A | | | | | 500 | | | |
| Sodium caseinate | | | | | | | | |
| L-Ascorbic acid | | | | | | 1000 | | |
| L-ascorbic acid palmitic acid ester | | | | | | | 80 | 80 |
| Water-soluble soybean polysaccharide | | | | | | | | 40 |
| Evaluation | | | | | | | | |
| Evaluation of flavor derived from inhibitor | | 5.0 | 5.0 | 5.0 | 4.8 | 5.0 | 5.0 | 4.8 |
| Evaluation of photodegradation odor | | 2.2 | 3.2 | 3.6 | 2.3 | 2.3 | 4.3 | 4.5 |
| Overall evaluation | | Unacceptable | Acceptable | Acceptable | Unacceptable | Unacceptable | Acceptable | Acceptable |
| Overall evaluation score | | 30 | 35 | 38 | 28 | 30 | 43 | 43 |

As is understood from Examples in Table 7, in the tomato juice-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the flavor derived from the inhibitor was reduced by using a water-soluble polysaccharide derived from a *Fabaceae* plant in combination. As is understood from Comparative Examples, ascorbic acid or the soybean peptide material alone could not sufficiently suppress the photodegradation odor.

### <Production and Evaluation of Green Juice (Aojiru)-Containing Beverage>

The components were mixed at the ratios show in Table 8, and the mixture was placed in a PET bottle and sterilized by heating at 85°C for 30 minutes. The flavor derived from the inhibitor before the deterioration test was evaluated using the obtained green juice-containing beverage. Subsequently, the sample was held under the conditions of 5°C and an LED light source of 40000 Lx for 72 hours, and then a photodegradation odor was evaluated. Note that the additive-free sample of Comparative Example 26 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 8.

**(Table 8) Effect of Each Protein Material on Suppression of Photodegradation of Green Juice Beverage**

| | (Formulation) | Comparative Example 26 | Example 39 | Example 40 | Comparative Example 27 | Comparative Example 28 | Example 41 | Example 42 |
|---|---|---|---|---|---|---|---|---|
| Green juice (Aojiru) beverage | (mass%) | 99 | 99 | 99 | 99 | 99 | 99 | 99 |
| Water | | 1 | 1 | 1 | 1 | 1 | 1 | 1 |
| Soybean protein material A | (ppm) | | 50 | | | | 100 | 100 |
| Pea protein material A | | | | 50 | | | | |
| Soybean protein material B | | | | | | | | |
| Soybean protein material C | | | | | | | | |
| Soybean peptide material A | | | | | 500 | | | |
| Sodium caseinate | | | | | | | | |
| L-Ascorbic acid | | | | | | 1000 | | |
| L-ascorbic acid palmitic acid ester | | | | | | | 80 | 80 |
| Water-soluble soybean polysaccharide | | | | | | | | 40 |
| Evaluation | | | | | | | | |
| Evaluation of flavor derived from inhibitor | | 5.0 | 5.0 | 5.0 | 4.8 | 5.0 | 5.0 | 5.0 |
| Evaluation of photodegradation odor | | 2.1 | 3.1 | 3.5 | 1.4 | 2.1 | 4.2 | 4.9 |
| Overall evaluation | | Unacceptable | Acceptable | Acceptable | Unacceptable | Unacceptable | Acceptable | Acceptable |
| Overall evaluation score | | 29 | 34 | 37 | 25 | 29 | 43 | 49 |

As is understood from Examples in Table 8, in the green juice (aojiru)-containing beverage, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination. As is understood from Comparative Examples, ascorbic acid or the soybean peptide material alone could not sufficiently suppress the photodegradation odor.

### <Production and Evaluation of Fruit Wine>

The components were mixed at the ratios show in Table 9, and the mixture was placed in a PET bottle and sterilized by heating at 85°C for 30 minutes. The flavor derived from the inhibitor before the deterioration test was evaluated using the obtained fruit wine. Subsequently, the sample was held under the conditions of 5°C and an LED light source of 40000 Lx for 48 hours, and then a photodegradation odor was evaluated. Note that the additive-free sample of Comparative Example 29 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 9.

**(Table 9) Effect of Each Protein Material on Suppression of Photodegradation of Fruit Wine**

| | (Formulation) | Comparative Example 29 | Example 43 | Example 44 | Comparative Example 30 | Comparative Example 31 | Example 45 | Example 46 |
|---|---|---|---|---|---|---|---|---|
| Wine | (mass%) | 99 | 99 | 99 | 99 | 99 | 99 | 99 |
| Water | | 1 | 1 | 1 | 1 | 1 | 1 | 1 |
| Soybean protein material A | (ppm) | | 50 | | | | 100 | 100 |
| Pea protein material A | | | | 50 | | | | |
| Soybean protein material B | | | | | | | | |
| Soybean protein material C | | | | | | | | |
| Soybean peptide material A | | | | | 500 | | | |
| Sodium caseinate | | | | | | | | |
| L-Ascorbic acid | | | | | | 1000 | | |
| L-ascorbic acid palmitic acid ester | | | | | | | 80 | 80 |
| Water-soluble soybean polysaccharide | | | | | | | 40 | |
| Evaluation | | | | | | | | |
| Evaluation of flavor derived from inhibitor | 5.0 | 4.9 | 4.8 | 4.5 | 4.9 | 4.8 | 4.8 | |
| Evaluation of photodegradation odor | 2.1 | 3.2 | 3.2 | 1.4 | 2.1 | 3.5 | 4.2 | |
| Overall evaluation | Unacceptable | Acceptable | Acceptable | Unacceptable | Unacceptable | Acceptable | Acceptable | |
| Overall evaluation score | 29 | 34 | 33 | 22 | 28 | 35 | 41 | |

As is understood from Examples in Table 9, in the fruit wine, the inclusion of a protein material having the specific properties defined in the present invention enabled reduction of the photodegradation odor without impairing the original flavor of the beverage. Furthermore, the photodegradation odor could be further reduced by using a fatty acid ester of ascorbic acid in combination. In addition, the photodegradation odor was further reduced by using a water-soluble polysaccharide derived from a *Fabaceae* plant in combination. As is understood from Comparative Examples, ascorbic acid or the soybean peptide material alone could not sufficiently suppress the photodegradation odor.

### <Production and Evaluation of Coffee Beverage>

To 10 parts by mass of coffee beans ground after roasting, 100 parts by mass of hot water was added, insoluble matter was separated, and a coffee extract was then obtained by addition of water to adjust the solid content to 1.2 mass%. Thereafter, the components were mixed at the ratios shown in Table 10, and the mixture was placed in a PET bottle and sterilized by heating at 85°C for 30 minutes. The flavor derived from the inhibitor before the deterioration test was evaluated using the obtained coffee beverage. Subsequently, the sample was held under the conditions of 5°C and an LED light source of 40000 Lx for 48 hours, and then a photodegradation odor was evaluated. Note that the additive-free sample of Comparative Example 32 stored in the dark was used as a reference example for evaluation. The test group in which the evaluation of the flavor derived from the inhibitor was 3 points or more and the evaluation of the photodegradation odor was 3 points or more was comprehensively determined to be acceptable. The results are summarized in Table 10.

**(Table 10) Effect of Each Protein Material on Suppression of Photodegradation of Coffee Beverage**

| | (Formulation) | Comparative Example 32 | Example 47 | Example 48 | Example 49 | Example 50 | Example 51 | Example 52 | Example 53 | Comparative Example 33 | Comparative Example 34 | Comparative Example 35 |
|---|---|---|---|---|---|---|---|---|---|---|---|---|
| Coffee extract | (mass%) | 99 | 99 | 99 | 99 | 99 | 99 | 99 | 99 | 99 | 99 | 99 |
| Water | | 1 | 1 | 1 | 1 | 1 | 1 | 1 | 1 | 1 | 1 | 1 |
| Soybean protein material A | (ppm) | | 25 | 50 | 100 | 200 | 500 | 1000 | | | | |
| Pea protein material A | | | | | | | | | 50 | | | |
| Soybean protein material C | | | | | | | | | | 1000 | | |
| Soybean peptide material A | | | | | | | | | | | 1000 | |
| L-Ascorbic acid | | | | | | | | | | | | 2000 |
| Evaluation | | | | | | | | | | | | |
| Evaluation of flavor derived from inhibitor | | 5.0 | 4.9 | 4.8 | 4.7 | 4.7 | 4.5 | 4.2 | 4.9 | 3.8 | 4.0 | 4.7 |
| Evaluation of photodegradation odor | | 1.4 | 3.0 | 4.2 | 4.2 | 4.9 | 4.9 | 4.9 | 4.3 | 1.4 | 1.3 | 1.0 |
| Overall evaluation | | Unacceptable | Acceptable | Acceptable | Acceptable | Acceptable | Acceptable | Acceptable | Acceptable | Unacceptable | Unacceptable | Unacceptable |
| Overall evaluation score | | 27 | 33 | 41 | 40 | 46 | 44 | 42 | 43 | 16 | 18 | 23 |

As is understood from Examples in Table 10, in the coffee, the inclusion of a protein material having the specific properties defined in the present invention enabled reduction of the photodegradation odor without impairing the original flavor of the beverage. As is understood from Comparative Examples, ascorbic acid, a soybean protein material not satisfying the requirements of the present invention, or a soybean peptide material alone could not sufficiently suppress the photodegradation odor.

### Industrial Applicability

According to the present invention, it is possible to provide a flavor deterioration inhibitor that, when used in a beverage, suppresses flavor deterioration caused by a storage environment, particularly flavor deterioration caused by light irradiation, without impairing the original flavor of the beverage, and a beverage containing the flavor deterioration inhibitor.

## Claims

1. A flavor deterioration inhibitor for food and/or drink, comprising a protein material having properties A and B set forth below:
(A) after an aqueous solution having a crude protein mass of 20 mass% is heated at 80°C for 30 minutes, a viscosity measured at 25°C is 10000 mPa·s or less; and
(B) a TCA solubilization percentage of 0.22 M is from 30% to 95%.

2. The flavor deterioration inhibitor according to claim 1, wherein the food and/or drink is a beverage.

3. The flavor deterioration inhibitor according to claim 2, wherein the beverage is one or more selected from fruit juice, vegetable juice, and coffee.

4. The flavor deterioration inhibitor according to claim 3, wherein the fruit juice comprises one or more selected from citrus fruits, apples, and grapes.

5. The flavor deterioration inhibitor according to claim 1, wherein flavor deterioration is due to photodegradation caused by light irradiation.

6. The flavor deterioration inhibitor according to claim 2, wherein flavor deterioration is due to photodegradation caused by light irradiation.

7. The flavor deterioration inhibitor according to claim 3, wherein flavor deterioration is due to photodegradation caused by light irradiation.

8. The flavor deterioration inhibitor according to claim 4, wherein flavor deterioration is due to photodegradation caused by light irradiation.

9. A beverage containing from 10 to 1500 ppm of a protein material having properties A and B set forth below, the beverage comprising one or more selected from fruit juice, vegetable juice, and coffee:
(A) after an aqueous solution having a crude protein mass of 20 mass% is heated at 80°C for 30 minutes, a viscosity measured at 25°C is 10000 mPa·s or less; and
(B) a TCA solubilization percentage of 0.22 M is from 30% to 95%.

10. The beverage according to claim 9, containing from 5 to 1000 ppm of a fatty acid ester of ascorbic acid.

11. The beverage according to claim 10, containing from 1 ppm or more of a water-soluble polysaccharide derived from a *Fabaceae* plant.

12. The beverage according to claim 9, comprising one or more selected from citrus fruits, apples, and grapes.

13. The beverage according to claim 10, comprising one or more selected from citrus fruits, apples, and grapes.

14. The beverage according to claim 11, comprising one or more selected from citrus fruits, apples, and grapes.

15. A method for suppressing flavor deterioration of a beverage, the method comprising blending, with the beverage, a protein material having properties A and B set forth below:
(A) after an aqueous solution having a crude protein mass of 20 mass% is heated at 80°C for 30 minutes, a viscosity measured at 25°C is 10000 mPa·s or less; and
(B) a TCA solubilization percentage of 0.22 M is from 30% to 95%.

16. The method for suppressing flavor deterioration according to claim 15, wherein the flavor deterioration is due to photodegradation caused by light irradiation.
